(19) Europäisches Patentamt
European Patent Office
Office européen des brevets

(11) **EP 3 319 148 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(51) Int Cl.:
*H01M 2/10* (2006.01)   *H01M 10/6567* (2014.01)
*H01M 10/643* (2014.01)   *H01M 10/613* (2014.01)

(21) Anmeldenummer: **17196542.9**

(22) Anmeldetag: **16.10.2017**

(54) **BATTERIEMODUL**

BATTERY MODULE

MODULE DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2016 DE 102016121173**

(43) Veröffentlichungstag der Anmeldung:
**09.05.2018 Patentblatt 2018/19**

(73) Patentinhaber: **Erbslöh Aluminium GmbH**
**42553 Velbert (DE)**

(72) Erfinder:
• **SUCKE, Norbert-William**
**47269 Duisburg (DE)**
• **LÖCHTE, Lothar**
**40723 Hilden (DE)**
• **BRAUN, Jörg**
**58456 Witten (DE)**

(74) Vertreter: **Buse, Mentzel, Ludewig**
**Patentanwaltskanzlei**
**Kleiner Werth 34**
**42275 Wuppertal (DE)**

(56) Entgegenhaltungen:
**EP-A1- 1 990 860   CN-A- 106 058 372**
**US-A1- 2010 119 929   US-A1- 2013 183 566**
**US-B2- 8 835 034**

**Beschreibung**

Die Erfindung betrifft ein Batteriemodul mit einer Vielzahl von zylinderförmigen Batteriezellen, insbesondere für Kraftfahrzeuge.

Es werden zunehmend Fahrzeuge mit Elektroantrieb entwickelt, um ungewünschte Emissionen durch Abgase von Kraftfahrzeugen zu reduzieren. Die zur Fortbewegung der Elektrofahrzeuge notwendige elektrische Energie wird in einer Energiespeichereinrichtung im Kraftfahrzeug gespeichert, nämlich in einem Batteriesystem, welches mehrere Batteriemodule umfasst. In jedem Batteriemodul ist eine Vielzahl von Batteriezellen zusammengefasst. Beim Laden und Entladen dieser Batteriezellen entsteht Wärme, die aus den Batteriemodulen abgeführt werden muss.

Eine Kühleinrichtung für Batteriemodule zeigt das Dokument US 2013/0183566 A1. Hier werden mittels Wärmeverteilelementen aus Graphit die Batteriezellen auf Abstand gehalten. Die Wärmeverteilelemente werden von Luft durchströmt und so eine Wärmeabfuhr aus dem Batteriemodul möglich. Für eine Erhöhung der thermischen Leistung wird eine Vergrößerung der Oberfläche dieser Wärmeverteilelemente vorgeschlagen. Eine solche Luftkühlung erfordert jedoch einen relativ großen Bauraum für das Batteriemodul, was unerwünscht ist.

Eine mögliche Kühleinrichtung für ein solches Batteriemodul zeigt auch das Dokument DE 103 52 046 A1. Die zylindrischen Batteriezellen sind hier von einem einstückigen Aufnahmeelement umgeben. Diese Aufnahmeelemente besitzen in Längsrichtung verlaufende elastische Bereiche, welche gleichmäßig über den Durchmesser des Aufnahmeelements verteilt sind. Ein solches Aufnahmeelement besteht aus Kunststoff oder einem mit einer Isolierung versehenen Aluminiumblech. Auf diese Weise werden die Batteriezellen gleichmäßig in einem vorgesehenen Abstand im Batteriemodul gepackt. Eine Kühlung erfolgt durch ein Umströmen der Aufnahmeelemente, die sehr große Kühlkanäle bilden.

Das Dokument US 2010/0119929 A1 zeigt ein Batteriemodul mit einer Kühlstruktur aus ummantelten Rohren, welche mittels einer Kappe im Abstand zu den zylindrischen Batteriezellen gehalten werden. Die Zwischenräume zwischen den Batteriezellen und den Kühlmodulen sind mit einer Polymermatrix ausgefüllt, die zur Isolierung und der Crashaufnahme dient.

Das Dokument EP 1 990 860 A1 zeigt ein Batteriemodul mit einer Kühlstruktur, wobei die Kühlelemente aus einem Kühlrohr und einer Lamelle bestehen. Das Rohr und die Lamelle sind beispielsweise durch Presssitz zusammengefügt. Ausgehend von diesem Batteriemodul wird eine höhere Packungsdichte der eingesetzten Batterien im Batteriemodul gewünscht, um eine höhere Leistungsdichte je Batteriemodul zu ermöglichen und damit eine höhere Reichweite für das mit diesen Batteriemodulen bestückten Elektrofahrzeugen zu erreichen.

Diese Aufgabe wird mit einem Batteriemodul mit den Merkmalen des Anspruchs 1 gelöst. Vorteilhafte Ausführungen beschreiben die Unteransprüche.

Dieses neue Batteriemodul besitzt Modulwände, welche einen Innenraum zur Aufnahme zylinderförmiger Batteriezellen umfassen. Neben einer Vielzahl von zylinderförmigen Batteriezellen ist in dem Batteriemodul auch eine metallische Kühlstruktur angeordnet, welche die Wärme von den Batteriezellen ableiten kann. Die Batteriezellen sind je nach Größe des Batteriemoduls nebeneinander in einer Reihe und in mehreren Reihen angeordnet. Zwischen den einzelnen Batteriezellen sind die neuen Kühlhohlprofile eingesteckt. Mehrere metallische Kühlhohlprofile bilden die metallische Kühlstruktur. Jedes dieser Kühlhohlprofile weist einen parallel zur Längsachse der Batteriezellen verlaufenden Kühlkanal für ein Kühlfluid auf und jedes Kühlhohlprofil ist so ausgestaltet, dass es mit seinen äußeren Kontaktflächen an Mantelflächen von Batteriezellen anliegt, insbesondere an mindestens drei Batteriezellen und damit Wärme von mindestens drei Batteriezellen ableiten kann. In vorteilhafter Weise sind die Kühlhohlprofile so zwischen den Batteriezellen angeordnet, dass sich eine hohe Packungsdichte der Batteriezellen im Batteriemodul ergibt. Wird die Querschnittsfläche (A) des Innenraums des Batteriemoduls als Bezugsgröße herangezogen, so beträgt die Gesamtquerschnittsfläche (Agesamt) aller Batteriezellen, d.h. die Summe der Einzelquerschnittsflächen aller Batteriezellen mehr als 70% der Querschnittsfläche (A) des Innenraums des Batteriemoduls.

$$A_{gesamt} > 0{,}7 \text{ x } A$$

Die hohe Packungsdichte wird durch eine möglichst enge Packung der Batteriezellen erzielt, wobei durch die optimale Ausnutzung der verbleibenden Zwischenräume zwischen den Batteriezellen für die Kühlstruktur und die gute Wärmeableitung durch diese Kühlstruktur eine solch enge Packung erst ermöglicht wird. Diese hohe Packungsdichte bedeutet auch eine hohe elektrische Leistung pro Fläche bzw. pro Volumeneinheit des Batteriemoduls. Die minimal gehaltenen Zwischenräume zwischen den Batteriezellen dienen dabei insbesondere der Aufnahme der Kühlhohlprofile. Diese metallischen Kühlhohlprofile leiten über ihre metallischen Kontaktflächen die Wärme beim Laden oder Entladen der Batteriezellen ab und bilden aufgrund der Festigkeit des metallischen Materials eine stabile Struktur, was sich positiv auf die Crashcharakteristik des Batteriemoduls auswirkt. Die Einzelbatteriezellen werden nämlich durch diese Kühlhohlprofile mechanisch voneinander getrennt.

Bei den Kühlhohlprofilen handelt es sich um stranggepresste Hohlprofile aus einer Aluminiumlegierung. Diese Materialauswahl unterstützt den Leichtbau eines solchen Batteriemoduls, was insbesondere für die Anwendung bei Kraftfahrzeugen von Bedeutung ist.

In einem Batteriemodul sind mehrere Batteriezellen nebeneinander in einer Reihe und mehrere solcher Reihen vorgesehen. Dabei sind einige Batteriezellen benachbart zu den Modulwänden angeordnet, welche nachfolgend als äußere Batteriezellen bezeichnet werden sollen und es gibt eine Vielzahl innerer Batteriezellen, welche umfangsseitig von weiteren Batteriezellen umgeben sind. Hierbei bilden sich Zwischenräume zwischen den in geringem Abstand zueinander angeordneten Batteriezellen. Insbesondere die Zwischenräume zwischen den inneren Batteriezellen zeigen einen sternförmigen Querschnitt. Die neuen Kühlhohlprofile werden in die Zwischenräume zwischen den einzelnen Batteriezellen eingesteckt und füllen die Zwischenräume zwischen den Batteriezellen nahezu aus, da die Querschnittsflächen der Kühlhohlprofile an den Querschnitt dieser Zwischenräume angepasst sind. Je nach Anordnung der Reihen von Batteriezellen, z.B. eine symmetrische Anordnung der Reihen oder eine versetzten Anordnung der Reihen, ergeben sich unterschiedliche Zwischenräume und damit unterschiedlich Querschnitte für die einzusteckenden Kühlhohlprofile.

Die Kühlhohlprofile weisen einen sternförmigen Querschnitt mit drei oder vier Zacken auf, wobei sich zwischen zwei Zacken jeweils eine konkav ausgebildete Kontaktfläche erstreckt, deren Radius an den Radius der Batteriezellen angepasst ist, so dass die Kühlhohlprofile mit ihren Kontaktflächen eng an den Mantelflächen der Batteriezellen anliegen können.

Bei einer bevorzugten Ausführungsform werden die Kühlhohlprofile nicht in randseitige Zwischenräume, sondern nur in Zwischenräume im Inneren des Batteriemoduls eingesteckt, d.h. in solche Zwischenräume, die zumindest teilweise von inneren Batteriezellen begrenzt werden. Alle solchen inneren Zwischenräume eines Batteriemoduls, haben den gleichen Querschnitt und können dadurch mit den gleichen Kühlhohlprofilen bestückt werden. Dabei ergibt sich für eine innere Batteriezelle ein Kontakt mit mehreren Kühlhohlprofilen. Die Mantelfläche einer solchen Batteriezelle hat Kontakt mit mehreren Kontaktflächen von unterschiedlichen Kühlhohlprofilen. Hierbei wird die Wärme der inneren Batteriezelle über deren Mantelfläche abgeführt, wobei 75% der Mantelfläche einen unmittelbaren Kontakt mit den Kühlhohlprofilen hat, d.h. mindestens 75% der Mantelfläche wird gekühlt, d.h. kann Wärme an die Kontaktflächen der Kühlhohlprofile abgeben.

Die Kühlhohlprofile weisen mindestens einen möglichst groß dimensionierten Kühlkanal für das Kühlfluid auf, so dass die entstehende Wärme durch das Kühlfluid schnell abgeleitet werden kann. Als Kühlfluid werden flüssige Kühlmittel, wie beispielsweise eine wässrige Glykol-Mischung, oder es werden Kältemittel auf Basis von Fluorkohlenwasserstoffen oder Kohlendioxid eingesetzt. Von den Kühlkanälen wird das Kühlfluid in Sammler geleitet, die beispielsweise mit einem oder beiden Enden dieser Kühlkanäle verbunden sind. Das Kühlfluid kann auch durch einen Kühlkanal in das Kühlhohlprofil hinein und durch einen weiteren Kühlkanal des gleichen Kühlhohlprofils im Gegenstrom zurückgeführt werden.

Bei einer besonders vorteilhaften Ausführungsform füllt ein Kühlhohlprofil gleich mehrere benachbarte innere Zwischenräume zwischen den Batteriezellen aus. Ein solches Kühlhohlprofil hat einen Querschnitt, der vergleichbar ist mit mehreren aneinandergereihten sternförmigen Kühlhohlprofilen, die über ihre Zacken miteinander verbunden sind. Bevorzugt sind solche Kühlhohlprofile, die zwischen zwei Reihen von Batteriezellen eingesteckt werden und auf diese Weise die Montage erleichtern. Ein solches langgestrecktes Kühlhohlprofil kann ebenfalls durch Strangpressen hergestellt werden, z.B. bis zu einer Länge von 350 mm.

Die Einstecktiefe der Kühlhohlprofile betrifft bevorzugt die gesamte Höhe der Batteriezellen. Bei einer weiteren Ausführung werden die Kühlhohlprofile nur über einen Teil der Batteriezellenhöhe eingesteckt.

Zwischen den Batteriezellen und der metallischen Kühlstruktur ist eine elektrische Isolierung vorzusehen. Besitzen die Batteriezellen keine solche Isolierung, so können die eingesteckten Kühlhohlprofile mit einer solchen Isolierschicht auf ihren Kontaktflächen versehen werden. Bei einer bevorzugten Ausführungsform sind die Kühlhohlprofile umfangsseitig von einer Isolierschicht bedeckt. Dies kann eine isolierende Pulverbeschichtung oder ein isolierender folienartiger Überzug sein. Bei Kühlhohlprofilen aus einem Aluminiummaterial wird vorzugsweise eine Hartanodisation vorgenommen, um eine isolierende Oxidschicht an der Profiloberfläche zu erzielen. Diese relativ dicken Oxidschichten, die bei einer Hartanodisation gebildet werden, betragen zwischen 20 $\mu$m bis 150 $\mu$m. Eine ausreichende elektrische Isolierung unter Berücksichtigung einer guten Wärmeableitung wird bei Oxidschichten bis 80 $\mu$m erreicht.

Mit der neuen metallischen Kühlstruktur wird bei Batteriemodulen eine optimale Packungsdichte bei maximaler Leistungsdichte erreicht. Für die sehr gute Kühlung über die Kontaktflächen der Kühlhohlkörper werden die Zwischenräume zwischen den Zellen, die sich bei einer solchen guten Packungsdichte ergeben, optimal ausgenutzt. Hierbei gewährleisten die Kühlhohlkörper zum einen eine gute Wärmeableitung über das metallische Material der Kühlstruktur und eine Kühlung über das durch die Kühlstruktur fließende Kühlfluid. Darüber hinaus gewährleisten die Kühlhohlkörper durch ihre enge Anlage an den Batteriezellen ein gutes Crashverhalten. Jede einzelne Batteriezelle wird durch die Kühlhohlkörper mechanisch von benachbarten Batteriezellen getrennt.

Nachfolgend werden Ausführungsbeispiele anhand der Zeichnungen beschrieben. Die Zeichnungen zeigen:

Fig. 1a zeigt ein Batteriemodul ohne Kühlstruktur,

Fig. 1b einen Ausschnitt aus Fig. 1a,

Fig. 2 ein vergrößerter Querschnitt durch ein Kühlhohlprofil,

Fig. 3a     ein weiteres Batteriemodul ohne Kühlstruktur,

Fig. 3b     ein vergrößerter Ausschnitt aus Fig. 3a,

Fig. 4     ein vergrößerter Querschnitt eines Kühlhohlprofils,

Fig. 5     ein weiteres Batteriemodul,

Fig. 6     ein vergrößerter Querschnitt durch ein Kühlhohlprofil.

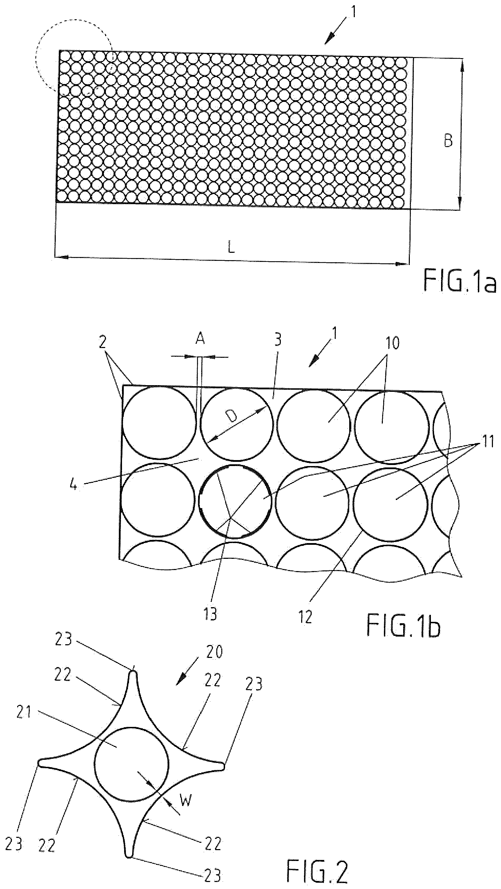

Die Fig. la zeigt eine Batteriemodul 1 und Fig. 1b einen vergrößerten Ausschnitt aus diesem Batteriemodul 1. Modulwände 2 begrenzen einen Innenraum dieses Batteriemoduls 1. In dem Innenraum sind zylinderförmige Batteriezellen 10, 11 in 13 Reihen angeordnet. Jede Reihe umfasst 30 solcher zylindrischer Batteriezellen 10, 11. Im Batteriemodul 1 sind demzufolge 390 Batteriezellen 10, 11 angeordnet. In diesem Beispiel sind die Batteriezellen 10, 11 vom Typ 18650. Dies bedeutet, der Durchmesser D jeder Batteriezelle 10, 11 ist 18,5 mm. Die Höhe H der Batteriezellen 10, 11 beträgt 65 mm. Zwischen den Batteriezellen 10, 11 ist ein Abstand A von 0,5 mm eingehalten. Es ergeben sich Zwischenräume 3 zwischen den äußeren Batteriezellen 10 und den Modulwänden 2 und innere Zwischenräume 4 zwischen diesen äußeren Batteriezellen 10 und inneren Batteriezellen 11 bzw. zwischen inneren Batteriezellen 11. Der Querschnitt dieser inneren Zwischenräume 4 ist sternförmig. An diesen sternförmigen Querschnitt ist der Querschnitt der einzusteckenden Kühlhohlprofile 20 angepasst, welche in Fig.la und 1b noch nicht im Batteriemodul 1 angeordnet sind.

Ein solches Kühlhohlprofil 20 ist in Fig. 2 vergrößert dargestellt. Es ist symmetrisch. Um die Symmetrieachse herum ist ein Kühlkanal 21 vorgesehen, durch den ein Kühlfluid fließt. Bei eingestecktem Kühlhohlprofil 20 verläuft der Kühlkanal 21 parallel zur Ausrichtung der Batteriezellen 10, 11, in diesem Fall über deren gesamte Höhe. Die Tiefe des Kühlhohlprofils beträgt 65,3 mm. Der Kühlkanal 21 des Kühlhohlprofils 20 ist entweder mit einem weiteren Kühlhohlprofil 20 oder mit einem Sammler verbunden und wird von einem Kühlfluid, wie z.B. einer Kühlflüssigkeit oder einem bekannten Kältemittel, durchflossen. Das im Querschnitt sternförmige Kühlhohlprofil 20 zeigt in diesem Beispiel vier Zacken 23. Die Zacken 23 erstrecken sich bei einem eingesetzten Kühlhohlprofil 20 bis weit in den verengten Zwischenraum 4 zwischen zwei benachbarten Batteriezellen 10, 11. Nach dem Einstecken liegen die vier Kontaktflächen 22 des Kühlhohlprofils 20, die sich zwischen jeweils zwei Zacken 23 erstrecken, an der Mantelfläche 12, der den jeweiligen Zwischenraum 4 begrenzenden Batteriezellen 10, 11 an. Hierzu sind die Kontaktflächen 22 des Kühlhohlprofils 20 entsprechend an den Durchmesser D der Batteriezellen 10, 11 angepasst, um durch die Kontaktierung eine gute Wärmeableitung sicherzustellen. Bei diesem Kühlhohlprofil 20 handelt es sich um ein stranggepresstes Aluminiumprofil. Das Aluminiummaterial des Kühlhohlprofils 20 besitzt eine gute Wärmeleitfähigkeit und gewährleistet damit eine gute Wärmeableitung von den Batteriezellen 11 und 12, insbesondere wenn Wärme beim Laden und Entladen der Batteriezellen 10, 11 entsteht. Diese Wärme wird über die Mantelflächen 12 der Batteriezellen 10, 11 an die Kontaktflächen 22 der Kühlhohlprofile 20 übertragen. Die in Fig.2 gezeigten Kühlhohlprofile 20 werden in die Zwischenräume 4 eingesteckt und umfassen die Mantelfläche 12 einer inneren Batteriezelle 11 nahezu. In Fig. 1b ist hervorgehoben, dass die Mantelfläche 12 einer inneren Batteriezelle 11, welche von vier eingesteckten Kühlhohlprofilen 20 umgeben sein wird, bis auf geringe Bereiche Ihres Umfangs, nämlich wo benachbarte Batteriezellen 10, 11 mit ihrem geringsten Abstand A angeordnet sind, gekühlt wird. In diesem Beispiel wurden die gekühlten Bereiche der Mantelfläche 13 als dickere Linie hervorgehoben. Für den Anteil an gekühlter Mantelfläche 13 wurde ein Wert von 87% bezogen auf die gesamte Mantelfläche 12 ermittelt. Dies gilt soweit die einzelnen Batteriezellen 11 über ihre gesamte Länge durch solche Kühlhohlprofile 20 gekühlt werden. Denkbar ist auch, solche Kühlhohlprofile 20 nur über eine bestimmte Tiefe in das Batteriemodul einzustecken.

Wird bei einem Batteriemodul 1, gezeigt in Fig.1a, in sämtliche sternförmige Zwischenräume 4 jeweils ein Kühlhohlprofil 20 eingesteckt, so wird bei einer Länge L= 584 mm und einer Breite B=251 mm des Batteriemoduls 1 eine Querschnittsfläche A = 146 584 mm² ermittelt. In dem Batteriemodul 1 sind 390 Batteriezellen 10, 11 im Innenraum, nämlich 30 Batteriezellen in jeder Reihe und insgesamt 13 Reihen. Die Einzelquerschnittsfläche dieser Batteriezellen 10, 11 hat bei einem Durchmesser von D = 18.5 mm einen Wert von 268,80 mm². Die Gesamtquerschnittsfläche aller 390 Batteriezellen 10, 11 des Batteriemoduls 1 entspricht dann Agesamt = 104 832 mm². Vergleicht man diese Werte, so ergibt sich eine gute Packungsdichte, da 71,5 % der Querschnittsfläche A des Batteriemoduls 1 durch die Batteriezellen 10, 11 ausgefüllt wird.

Jede einzelne Batteriezelle des Typs 18650 hat eine Leistung von 3400 mWh. Damit hat dieses Batteriemodul 1 mit 390 Batteriezellen und einer Querschnittsfläche A von 146 584 mm² eine Leistungsdichte von 9,04 mWh/mm². Dieser hohe Leistungswert ergibt sich aus der optimalen Packungsdichte der Batteriezellen 10, 11.

Die eingesteckten Kühlhohlprofile 20 besitzen einen vergleichsweise großen Kühlkanal 21 für das Kühlfluid und eine geringe Wandstärke. Die minimalste Wandstärke W, gezeigt in Fig. 2, beträgt 0,5 mm. Ein solches Kühlhohlprofil 20 weist bei einer Höhe von 65,3 mm, d.h. bei einer vergleichbaren Höhe, wie die Batteriezellen 10, 11, ein Gesamtgewicht von 8,47 g auf. Das zusätzliche Gewicht der gesamten eingesteckten Kühlstruktur (29 x 12 Kühlhohlprofile 20) des Batteriemoduls 1 beträgt in diesem Beispiel 2947,56 g. Das Kühlhohlprofil 20 hat trotz des geringen Gewichts eine gute Festigkeit. Diese kann durch geeignete Auswahl der Aluminiumlegierung entsprechend erhöht werden, um ein optimales Crashverhalten zu erzielen. Werden die Kühlhohlprofile 20 in die Zwischenräume 4 zwischen den Batteriezellen 10, 11 eingesteckt, so werden die Batteriezellen 10, 11 durch diese Kühlhohlprofile 20 mechanisch voneinander getrennt, d.h. der gewünschte Abstand A eingehalten.

Das in Fig. 1 gezeigte Batteriemodul hat eine hohe Packungsdichte, da 71,5 % der Querschnittsfläche A des Batteriemoduls 1 durch die Batteriezellen 10, 11 ausgefüllt sind. Diese hohe Packungsdichte bedeutet eine hohe elektrische Leistungsdichte, nämlich von 9,04 mWh/mm$^2$. Hierbei werden die Zwischenräume 4 zwischen den Batteriezellen 10, 11 optimal von den sternförmigen Kühlprofilen 20 ausgenutzt. Diese Kühlprofile 20 leiten einerseits aufgrund ihres Materials und ihrer großflächigen Anlage an den Mantelflächen 12 der einzelnen Batteriezellen 10, 11 Wärme gut von den Batteriezellen 10, 11 ab und dies bei minimalstem Gewicht für die Kühlprofile 20. Andererseits wird mittels der Kühlprofile 20 zusätzlich eine Kühlung der Batteriezellen 10, 11 aufgrund der von dem Kühlfluid durchflossenen Kühlkanäle 21 bewirkt, wobei für das Kühlfluid ein Kühlkanal 21 mit dem maximal möglichen Durchmesser vorgesehen ist, d.h. die Kühlprofile 20 sind mit einer minimale Wandstärke W unter Berücksichtigung der mechanischen Anforderungen, nämlich entsprechend den notwendigen Berstdruck des Kühlfluids, ausgelegt.

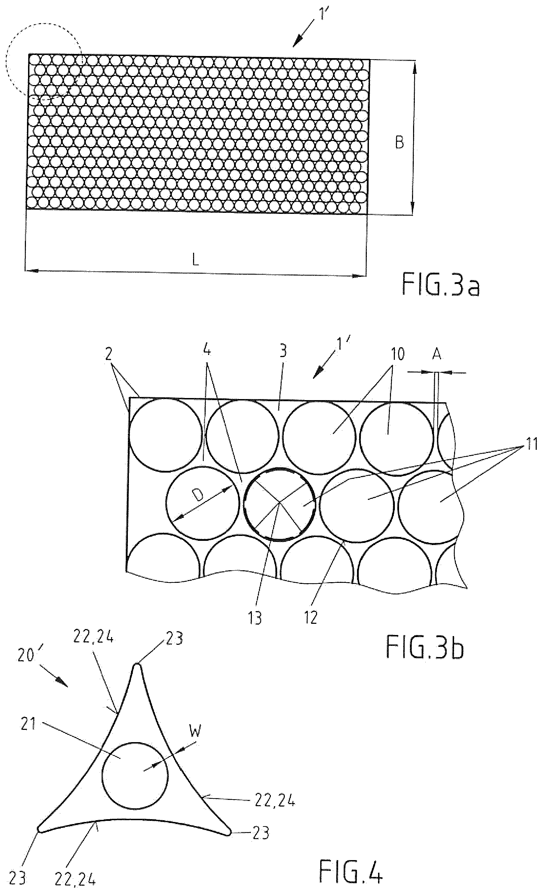

Ein weiteres Beispiel zeigt die Fig. 3a, 3b und 4. Das Batteriemodul 1' von Fig. 3a besitzt die gleiche Länge L=584 mm und Breite B=251 mm. In diesem Fall sind in einer Reihe ebenfalls 30 Batteriezellen 10, 11 angeordnet, jedoch sind in den benachbarten Reihen die Batteriezellen 10, 11 versetzt dazu vorgesehen, so dass in dem gleichen Innenraum 15 Reihen mit Batteriezellen 10, 11 untergebracht werden können. Zwischen den Batteriezellen 10, 11 ergeben sich, wie besser aus Fig. 3b zu ersehen, Zwischenräume 3, 4. Zwischen den Modulwänden 2 und den äußeren Batterien 10 werden auch in diesem Beispiel keine Kühlhohlprofile 20' eingesteckt. Die Kühlhohlprofile 20', gezeigt in Fig. 4, werden zwischen den äußeren Batteriezellen 10 und den inneren Batteriezellen 11 bzw. zwischen inneren Batteriezellen 11 angeordnet. In diesem Fall hat das Kühlhohlprofil 20' einen Querschnitt mit drei Zacken 23 und ebenfalls einen Kühlkanal 21 für ein Kühlfluid. Die minimale Wandstärke W ist auch in diesem Fall 0,5 mm. Ein solches Kühlhohlprofil 20' liegt mit seinen Kontaktflächen 22 eng an den Mantelflächen 12 der Batteriezellen 10, 11 an, die einen Zwischenraum 4 bilden. Eine Batteriezelle 11 ist jetzt von 6 weiteren Batteriezellen 10, 11 umgeben und hat zu diesen einen minimalen Abstand A von 0,5 mm. Des Weiteren sind sechs Zwischenräume 4 um eine Batteriezelle 11 herum gebildet, in welche Kühlhohlprofile 20' eingesteckt werden, so dass eine Batteriezelle 11 an sechs Kontaktflächen 22 von Kühlhohlprofilen 20' anliegt. Hierbei wird 80% der gesamten Mantelfläche 12 durch diese Kontaktflächen 22 der sechs Kühlhohlprofile 20' gekühlt. Die gekühlten Bereiche der Mantelflächen 13, welche als dicke Linie bei einer Batteriezelle 11 in Fig. 3b hervorgehoben sind, summieren sich demzufolge zu einer Kühlfläche, die 80% der gesamten Mantelfläche 12 darstellt. Bei diesem Batteriemodul 1' beträgt die Gesamtquerschnittsfläche der 450 Batteriezellen 10, 11 Agesamt = 120 960 mm$^2$. Im Vergleich zur Querschnittsfläche A = 146 584 mm$^2$ des Innenraum des Batteriemoduls 1' sind das 82,5 %. Dies bedeutet eine hohe Packungsdichte, was sich auf die Leistungsdichte auswirkt. Die Leistungsdichte beträgt in diesem Beispiel 10,44 mWh/mm$^2$. Die höhere Leistungsdichte bedeutet beim Kraftfahrzeug eine längere Reichweite.

Das gezeigte Sternprofil hat bei einer Höhe von 65,3 mm ein Gewicht von 2,84 g. Das zusätzliche Gewicht der gesamten eingesteckten Kühlstruktur (29 x 14 x 2 Kühlhohlprofile 20) des Batteriemoduls 1 beträgt in diesem Beispiel 2306,08 g.

Würde man das gleiche Modul mit den Modulwänden 2 einer Länge = 584 mm und einer Breite von 251 mm mit zylindrischen Batteriezellen des Typs 22650 bestücken, welche einen Durchmesser D= 22 mm und eine Höhe von 65 mm besitzen, so könnten bei versetzter Anordnung der Batteriezellen 12 Reihen mit 25 Batteriezellen in dem Modul untergebracht werden. Es würden sich wieder Zwischenräume 3, 4 ergeben. Im Falle man steckt in alle Zwischenräume 4 - wie in Fig. 3b gezeigt - jeweils ein dreizackiges Kühlhohlprofil 20' ein, welches an die Größe des Zwischenraums 4 angepasst ist und unter Berücksichtigung eines Abstands A zwischen den Batteriezellen 10, 11 von 0,5 mm, so ergibt sich dann für das Batteriemodul eine Packungsdichte von 77,8 %. Die gekühlte Mantelfläche 13 der Batteriezellen 11 beträgt 80,5 %.

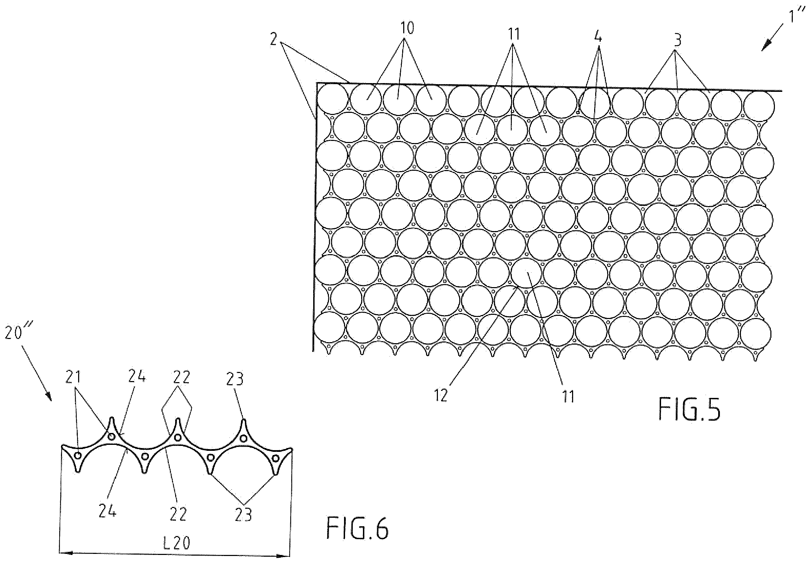

Das in Fig. 5 gezeigte Batteriemodul 1" hat Modulwänden 2 mit der gleichen Länge von 584 mm und einer Breite von 251 mm. Es besitzt 15 Reihen mit 30 zylindrischen Batteriezellen 10, 11 des Typs 18650, nämlich äußere Batteriezellen 10 und innere Batteriezellen 11. In den Zwischenräumen 4 sind Kühlhohlprofil 20" eingesteckt. Diese Kühlhohlprofile 20" stellen eine Aneinanderreihung von 7 sternförmigen Kühlhohlprofilen 20' gemäß Fig. 4 dar. Es sind auch Kühlhohlprofile 20" mit einer anderen Anzahl oder mit einer anderen Anordnung der sternförmige Kühlhohlprofile 20' in einem integral ausgebildeten Kühlhohlprofil 20" möglich. Das gezeigte Kühlhohlprofil 20" hat eine Länge L20 von 65,1 mm und erleichtert die Montage, da nicht jeder Zwischenraum 4 einzeln von einem Kühlhohlprofil 20' durch eine Steckmontage ausgefüllt wird, sondern gleichzeitig - in diesem Fall sieben Zwischenräume 4 - von einem Kühlhohlprofil 20" gefüllt werden. Es ergibt sich für ein Batteriemodul 1" eine Packungsdichte von 82,5 %. Die gekühlte Mantelfläche 13 der Batteriezellen 11 beträgt 93,5 %. Das Kühlhohlprofil 20" hat bei einer Höhe von 65,3 mm ein Gewicht von 20,7 g. Das zusätzliche Gewicht der gesamten eingesteckten Kühlstruktur des Batteriemoduls 1 beträgt in diesem Beispiel 2316,16 g. Die Leistungsdichte beträgt in diesem Ausführungsbeispiel 10,44 mWh/mm$^2$.

Die Maße eines solchen Kühlhohlprofils 20", welches ein steckbares Profilgeflecht darstellt, kann auch an andere Batteriedurchmesser angepasst werden, z.B. an Batterien des Typs 22650 oder auch Batterien größeren Durchmessers.

Bezugszeichenliste

| 1, 1', 1" | Batteriemodul |
|---|---|
| 2 | Modulwand |
| 3 | randseitige Zwischenräume |
| 4 | innere Zwischenräume |
| 5 | Abstand |
| 10, 11 | Batteriezellen |
| 12 | Mantelfläche |
| 13 | gekühlte Mantelfläche |
| 20, 20', 20" | Kühlhohlprofil |
| 21 | Kühlkanal |
| 22 | Kontaktfläche |
| 23 | Zacke |
| 24 | Isolierschicht |

| A | Abstand |
|---|---|
| B | Breite von 1 |
| D | Durchmesser |
| L | Länge von 1 |
| L20 | Länge von 20 |

**Patentansprüche**

1. Batteriemodul mit Modulwänden (2), welche einen Innenraum umfassen, in diesem Innenraum sind mehrere zylinderförmige Batteriezellen (10, 11) und eine metallische Kühlstruktur angeordnet, wobei die Batteriezellen (10, 11) nebeneinander in einer Reihe und in mehreren Reihen innerhalb der Modulwände (2) angeordnet sind, wobei jede Batteriezelle (10, 11) entsprechend ihrem kreisförmigen Querschnitt eine Einzelquerschnittsfläche und alle Batteriezellen (10, 11) zusammen eine Gesamtquerschnittsfläche (Agesamt) innerhalb der Modulwände (2) ausfüllen, dass die Kühlstruktur mehrere Kühlhohlprofile (20, 20', 20") umfasst, welche stranggepresste Hohlprofile aus Aluminium-Material sind, dass die Kühlhohlprofile (20, 20', 20") jeweils mindestens einen parallel zur Längsachse der Batteriezellen (10, 11) verlaufenden Kühlkanal (21) für ein Kühlfluid aufweisen, dass entweder die Batteriezellen (10, 11) eine elektrische Isolierung oder die Kühlhohlprofile (20, 20', 20") auf ihren Kontaktflächen (22) eine Isolierschicht (24) besitzen, dass durch die Kühlhohlprofile (20, 20', 20") jede Batteriezelle (10, 11) mechanisch von benachbarten Batteriezellen (10, 11) getrennt angeordnet ist, **dadurch gekennzeichnet, dass** die Batteriezellen (10, 11) in einer hohen Packungsdichte im Innenraum angeordnet sind, nämlich die Gesamtquerschnittsfläche (Agesamt) aller Batteriezellen (10, 11) mehr als 70 % der Querschnittsfläche (A) des Innenraums innerhalb der Modulwände (2) ausmacht,

$$Agesamt > 0{,}7 \text{ x } A$$

dass die Kühlhohlprofile (20, 20') einen sternförmigen Querschnitt mit drei oder vier Zacken (23) aufweisen, wobei sich zwischen zwei Zacken (23) jeweils eine konkav ausgebildete Kontaktfläche (22) erstreckt und der Kühlkanal (21) mittig um die Symmetrieachse der Kühlprofile (20, 20') angeordnet ist, wobei der Radius der Kontaktflächen (22) an den Radius der Batteriezellen (10, 11) angepasst ist, so dass die Kühlhohlprofile (20, 20', 20") mit ihren äußeren Kontaktflächen (22) eng an den Mantelflächen (12) von mindestens 3 Batteriezellen (10, 11) anliegen, wobei mehrere Kühlhohlprofile (20, 20') mit sternförmigen Querschnitt über jeweils zwei Zacken (23) integral miteinander zu einem langgestreckten Kühlhohlprofile (20") verbunden sind.

2. Batteriemodul nach Anspruch 1, **dadurch gekennzeichnet, dass** im Innenraum benachbart zu den Modulwänden (29) äußere Batteriezellen (10) angeordnet sind und weitere innere Batteriezellen (11) vorhanden sind, wobei die innere Batteriezellen (11) umfangseitig jeweils von weiteren Batteriezellen (10, 11) umgeben sind.

3. Batteriemodul nach Anspruch 2, **dadurch gekennzeichnet, dass** die Batteriezellen (10, 11) in einem geringen Abstand (5) von 0,5 mm zueinander angeordnet sind.

4. Batteriemodul nach Anspruch 2 oder 3, **dadurch gekennzeichnet, dass** die Kühlhohlprofile (20, 20', 20") in inneren Zwischenräumen (4) eingesteckt sind.

5. Batteriemodul nach Anspruch 4, **dadurch gekennzeichnet, dass** die Kühlhohlprofile (20, 20', 20") an die Größe der Zwischenräumen (4) zwischen den Batteriezellen (11) angepasst sind, um so Wärme von mindestens 75 % der Mantelfläche (12) jeder innere Batteriezelle (11) abzuleiten.

**6.** Batteriemodul nach einem der Ansprüche 1 bis 5, **dadurch gekennzeichnet, dass** das langgestreckte, durch Strangpressen erzeugte Kühlhohlprofil (20") eine Länge bis zu 350 mm aufweisen kann.

**7.** Batteriemodul nach einem der Ansprüche 1 bis 6, **dadurch gekennzeichnet, dass** die minimale Wandstärke (W) der Kühlhohlprofile (20, 20', 20") zwischen dem Kühlkanal (21) und den Kontaktflächen (22) nur 0,3 mm beträgt.

**8.** Batteriemodul nach einem der Ansprüche 1 bis 7, **dadurch gekennzeichnet, dass** zur elektrischen Isolierung die Batteriezellen (10, 11) eine hartanodisierte Oxidschicht besitzen oder mit einer isolierenden Pulverbeschichtung oder mit einem isolierenden folienartigen Überzug bedeckt sind.

**Claims**

**1.** Battery module with module walls (2), which comprise an interior space that features an arranged plurality of cylindrical battery cells (10, 11) and a metallic cooling structure,
wherein the battery cells (10, 11) are arranged side by side in one row and in a plurality of rows within the module walls (2), wherein each battery cell (10, 11) fills a single cross-sectional area according to its circular cross-section and all battery cells (10, 11) together fill a total cross-sectional area (Atotal) within the module walls (2),
wherein the cooling structure comprises several cooling hollow profiles (20, 20', 20"), which are extruded hollow profiles of aluminium material,
wherein the cooling hollow profiles (20, 20', 20") each have at least one cooling channel (21) for a cooling fluid that runs parallel to the longitudinal axis of the battery cells (10, 11),
wherein either the battery cells (10, 11) have electrical insulation or the cooling hollow profiles (20, 20', 20") have an insulating layer (24) on their contact surfaces (22),
wherein each battery cell (10, 11) is arranged mechanically separated from adjacent battery cells (10, 11) by the cooling hollow profiles (20, 20', 20"),
**characterised in that**
the battery cells (10, 11) are arranged in a high packing density in the interior space, namely the total cross-sectional area (Atotal) of all battery cells (10, 11) making up more than 70% of the cross-sectional area (A) of the interior space within the module walls (2),

$$Atotal > 0.7 \text{ x } A$$

the cooling hollow profiles (20, 20') have a star-shaped cross section with three or four serrations (23), in each case a concave contact surface (22) extending between two serrations (23) and the cooling channel (21) being arranged centrally around the axis of symmetry of the cooling profiles (20, 20'), wherein the radius of the contact surfaces (22) is adapted to the radius of the battery cells (10, 11) so that the cooling hollow profiles (20, 20', 20") lie with their outer contact surfaces (22) closely against the lateral surfaces (12) of at least 3 battery cells (10, 11), wherein a plurality of cooling hollow profiles (20, 20') having a star-shaped cross-section are integrally connected to one another via two serrations (23) in each case to form an elongated cooling hollow profile (20").

**2.** Battery module according to claim 1, **characterised in that** outer battery cells (10) are arranged in the interior adjacent to the module walls (29) and further inner battery cells (11) are present, the inner battery cells (11) being circumferentially surrounded in each case by further battery cells (10, 11).

**3.** Battery module according to claim 2, **characterised in that** the battery cells (10, 11) are arranged at a small distance (5) of 0.5 mm from one another.

**4.** Battery module according to claim 2 or 3, **characterised in that** the cooling hollow profiles (20, 20', 20") are inserted in inner intermediate spaces (4).

**5.** Battery module according to claim 4, **characterised in that** the cooling hollow profiles (20, 20', 20") are adapted to the size of the gaps (4) between the battery cells (11) so as to dissipate heat from at least 75% of the jacket surface (12) of each inner battery cell (11).

**6.** Battery module according to one of claims 1 to 5, **characterised in that** the elongated cooling hollow profile (20") produced by extrusion can have a length of up to 350 mm.

**7.** Battery module according to one of claims 1 to 6, **characterised in that** the minimum wall thickness (W) of the cooling hollow profiles (20, 20', 20") between the cooling channel (21) and the contact surfaces (22) is only 0.3 mm.

**8.** Battery module according to one of claims 1 to 7, **characterised in that** for electrical insulation the battery cells (10, 11) have a hard-anodised oxide layer or are covered with an insulating powder coating or with an insulating film-like coating.

**Revendications**

1. Module batterie comprenant des parois (2) de module qui délimitent un compartiment intérieur ; dans ce compartiment intérieur sont disposées plusieurs cellules (10, 11) de batterie de forme cylindrique et une structure de refroidissement métallique,

   sachant que les cellules (10, 11) de batterie sont disposées juxtaposées pour former un rang, et en plusieurs rangs à l'intérieur des parois (2) du module, sachant que chaque cellule de batterie (10, 11) remplit, conformément à section circulaire, une surface de section individuelle et que toutes les cellules (10, 11) de batterie remplissent ensemble une surface de section totale (Atotale) à l'intérieur des parois (2) du module,

   sachant que la structure de refroidissement comprend plusieurs profilés de refroidissement creux (20, 20', 20") consistant en des profilés creux extrudés en matériau aluminium,

   sachant que les profilés de refroidissement creux (20, 20', 20") présentent respectivement au moins un canal de refroidissement (21), pour un fluide de refroidissement, dont le tracé est parallèle à l'axe longitudinal des cellules de batterie (10, 11),

   sachant que soit les cellules de batterie (10, 11) possèdent une isolation électrique soit les profilés de refroidissement creux (20, 20', 20") présentent une couche isolante (24) sur leurs surfaces de contact (22),

   sachant que du fait des profilés de refroidissement creux (20, 20', 20"), chaque cellule de batterie (10, 11) est disposée mécaniquement séparée des cellules de batterie (10, 11) voisines,

   **caractérisé en ce que**

   les cellules de batterie (10, 11) sont disposées densément conditionnées dans le compartiment intérieur, à savoir que la surface de section totale (Atotale) de toutes les cellules de batterie (10, 11) représente plus de 70 % de la surface de section (A) du compartiment intérieur à l'intérieur des parois (2) du module,

   $$Atotale > 0,7 \times A$$

   **en ce que** les profilés de refroidissement creux (20, 20') présentent une section en forme d'étoile avec trois ou quatre dents (23), sachant qu'entre deux dents (23) s'étend respectivement une surface de contact (22) de forme concave et que le canal de refroidissement (21) est disposé centré autour de l'axe de symétrie des profilés de refroidissement (20, 20'),

   sachant que le rayon des surfaces de contact (22) est adapté au rayon des cellules de batterie (10, 11) de sorte que les profilés de refroidissement creux (20, 20', 20") appliquent étroitement, par leurs surfaces de contact extérieures (22), contre les surfaces enveloppantes (12) d'au moins 3 cellules de batterie (10, 11),

   sachant que plusieurs profilés de refroidissement creux (20, 20') de section étoilée sont intégralement reliés entre eux par respectivement deux dents (23) pour former un profilé de refroidissement creux (20") s'étendant en longueur.

2. Module batterie selon la revendication 1, **caractérisé en ce que** dans le compartiment intérieur sont disposés des cellules de batterie (10) extérieures au voisinage des parois (29) du module, et que d'autres cellules de batterie (11) intérieures sont présentes, sachant que les cellules de batterie (11) intérieures sont respectivement entourées, sur leur circonférence, de cellules de batterie (10, 11) supplémentaires.

3. Module batterie selon la revendication 2, **caractérisé en ce que** les cellules de batterie (10, 11) sont disposées à une distance réduite (5) de 0,5 mm les unes par rapport aux autres.

4. Module batterie selon la revendication 2 ou 3, **caractérisé en ce que** les profilés de refroidissement creux (20, 20', 20") sont enfichés dans les cavités intermédiaires (4) intérieures.

5. Module batterie selon la revendication 4, **caractérisé en ce que** les profilés de refroidissement creux (20, 20', 20") sont adaptés à la taille des cavités intermédiaires (4) entre les cellules de batterie (11) pour évacuer ainsi la chaleur d'au moins 75 % de la surface enveloppante (12) de chaque cellule de batterie (11) intérieure.

6. Module batterie selon l'une des revendications 1 à 5, **caractérisé en ce que** le profilé de refroidissement creux (20") allongé obtenu par extrusion peut présenter une longueur atteignant 350 mm.

7. Module batterie selon l'une des revendications 1 à 6, **caractérisé en ce que** l'épaisseur de paroi minimale (W) des profilés de refroidissement creux (20, 20', 20") entre le canal de refroidissement (21) et les surfaces de contact (22) n'est que de 0,3 mm.

8. Module batterie selon l'une des revendications 1 à 7, **caractérisé en ce que** pour l'isolation électrique les cellules de batterie (10, 11) possèdent une couche d'oxyde anodisée dure ou sont recouvertes d'un revêtement poudre isolant ou d'un enrobage isolant en forme de feuille.

FIG.1a

FIG.1b

FIG.2

FIG.3a

FIG.3b

FIG.4

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130183566 A1
- DE 10352046 A1
- US 20100119929 A1
- EP 1990860 A1